# EUROPEAN PATENT APPLICATION

(11) **EP 4 155 676 A1**
(43) Date of publication of application: **29.03.2023**
(21) Application number: 21198880.3
(22) Date of filing: 24.09.2021
(51) Int. Cl.: G01C 21/20, G01C 21/34, G06Q 10/04, G08G 5/00, G05D 1/02

(54) **DYNAMIC WAYPOINT MANAGEMENT FOR CONSTRAINED NAVIGATION**

(71) Applicant: Nokia Technologies Oy, 02610 Espoo (FI)
(72) Inventor: SUVITIE, Arto Kristian, 00930 Helsinki (FI)
(74) Representative: Nokia EPO representatives

(57) **Abstract**

Method, apparatuses, and computer program products provide for navigation in constrained environments through dynamic waypoint management during route modifications. An example method includes receiving a first request defining a route including a sequence of waypoints and determining whether a part of the route intersects with a constraint area. The method further includes, in accordance with a determination that the route intersects with the constraint area, generating adjustment waypoint(s) for the route, the adjustment waypoint(s) being positioned outside of the constraint area such that the route does not intersect with the constraint area. The method further includes modifying a location associated with one waypoint of the route according to a second request (e.g., a user requests the re-location of the one waypoint). The method further includes causing modification (e.g., removal) of a particular adjustment waypoint that precedes and/or succeeds the modified one waypoint to generate a revised route.

## Description

### TECHNOLOGICAL FIELD

An example embodiment relates generally to autonomous vehicle navigation, pathfinding, path planning, and/or the like. More particularly, an example embodiment includes techniques for improving performance of autonomous vehicles through dynamic waypoint management.

### BACKGROUND

In performing various tasks, an autonomous vehicle must be capable of navigating to, between, from, and/or the like various specified locations. Navigation between such specific locations may be constrained to a certain extent. For example, the autonomous vehicle may be prevented, precluded, barred, and/or the like from traversing through and/or being positioned in a particular area. Thus, an autonomous vehicle must efficiently navigate through various specified locations while respecting constraints specific to certain areas.

### BRIEF SUMMARY

Various embodiments of the present disclosure provide methods, systems, computer program products, apparatuses, devices, and/or the like for efficient autonomous navigation. More specifically, various embodiments are directed to dynamic waypoint management, particularly for navigation with respect to one or more constraint areas. Various waypoints that an autonomous vehicle seeks to navigate between may be interspersed among areas through which traversal by the autonomous vehicle is prevented (e.g., physically prevented), precluded, barred, and/or the like (e.g., constraint areas), and thus, dynamic waypoint management in accordance with various embodiments of the present disclosure enables the autonomous vehicle to efficiently navigate between the waypoints while respecting said areas (e.g., constraint areas). In particular, waypoints of a route are dynamically managed (e.g., generated, removed) during and/or responsive to modifications made to the route, such as an addition of waypoints, a re-location of waypoints, a deletion of waypoints, an addition/removal of constraint areas, and/or the like. In doing so, a revised route resulting from dynamic waypoint management may be provided to the autonomous vehicle for navigation that respects one or more constraint areas.

In dynamically managing waypoints of a route (e.g., during route modifications), various embodiments implement waypoint designations for each waypoint of a route, which control how a waypoint is managed. For instance, a waypoint may be a mandatory waypoint or an adjustment waypoint, an adjustment waypoint typically being specifically generated to respect and to account for a constraint area. A mandatory waypoint may refer to a waypoint provided or defined (e.g., by a user, by a system) for the navigation of the autonomous vehicle, such as for the autonomous vehicle to perform a task, as opposed to an adjustment waypoint which may be generated to account for a constraint area. An adjustment waypoint may be a temporary waypoint. Waypoint designations and other metadata in accordance with various embodiments of the present disclosure enable extended functionality in autonomous navigation and more specifically automatically handles constraint areas as a route is being modified. Generally, dynamic waypoint management improves efficiency and reduces the amount of necessary user inputs to define, plan, and implement a navigation route for an autonomous vehicle.

According to one aspect of the present disclosure, a computer-implemented method is provided. The method includes receiving a request defining a modification to a route including a sequence of one or more waypoints. A waypoint is either a mandatory waypoint or an adjustment waypoint, and the modification identifies a particular waypoint. In particular, the modification may include an addition of a particular waypoint to the sequence of one or more waypoints, a re-location of a particular waypoint of the sequence of one or more waypoints, or a deletion of a particular waypoint from the sequence of one or more waypoints, in various embodiments. The method further includes updating the route with respect to the particular waypoint according to the modification.

The method further includes removing one or more adjustment waypoints that precede and/or succeed the particular waypoint from the route so as to generate a first revised route. Thus, the first revised route does not include the one or more adjustment waypoints that precede and/or succeed the particular waypoint. The method further includes determining whether the first revised route intersects with a constraint area, and in accordance with a determination that the first revised route intersects with the constraint area, generating at least one additional adjustment waypoint that is positioned outside of the constraint area so as to generate a second revised route that does not intersect with the constraint area.

In various embodiments, the method further includes causing provision of the second revised route to an autonomous vehicle to direct the autonomous vehicle to navigate according to the second revised route. In various embodiments, the method further includes rendering the second revised route and the constraint area for display.

In various embodiments, the route is associated with a waypoint designation data object configured to describe whether a waypoint of the route is a mandatory waypoint or an adjustment waypoint. In various embodiments, updating the route with respect to the particular waypoint according to the modification includes updating the waypoint designation data object associated with the route to describe the particular waypoint as a mandatory waypoint.

In various embodiments, the method further includes receiving an indication of an addition of a second constraint area. The method further includes determining whether the second revised route intersects with the second constraint area, and in accordance with a determination that the second revised route intersects with the second constraint area, generating at least one additional waypoint so as to generate a third revised route that does not intersect with the first constraint area and the second constraint area. In various embodiments, the method further includes receiving an indication of a removal of a particular constraint area, and removing one or more adjustment waypoints that were generated in accordance with a determination that a respective route intersected with the particular constraint area.

In various embodiments, the modification to the route includes (i) an addition of the particular waypoint to the sequence of one or more waypoints, (ii) a re-location of the particular waypoint, the particular waypoint being one of the sequence of one or more waypoints, or (iii) a deletion of the particular waypoint from the sequence of one or more waypoints. In various embodiments, the at least one additional adjustment waypoint is generated using one or more pathfinding techniques configured to optimize the second revised route. In various embodiments, the request defining a modification to the route is received responsive to user interaction with a displayed rendering of the sequence of one or more waypoints of the route.

According to another aspect of the present disclosure, an apparatus is provided. The apparatus includes means for receiving a request defining a modification to a route including a sequence of one or more waypoints, the modification identifying a particular waypoint, and means for updating the route with respect to the particular waypoint according to the modification. A waypoint of the route is either a mandatory waypoint or an adjustment waypoint. The apparatus further includes means for removing one or more adjustment waypoints that precede and/or succeed the particular waypoint from the route so as to generate a first revised route that does not include the one or more adjustment waypoints that precede and/or succeed the particular waypoint. The apparatus further includes means for determining whether the first revised route intersects with a constraint area, and means for generating, in accordance with a determination that the first revised route intersects with the constraint area, at least one additional adjustment waypoint that is positioned outside of the constraint area so as to generate a second revised route that does not intersect with the constraint area.

In various embodiments, the apparatus further includes means for causing provision of the second revised route to an autonomous vehicle to direct the autonomous vehicle to navigate according to the second revised route. In various embodiments, the apparatus further includes means for rendering the second revised route and the constraint area for display.

In various embodiments, the route is associated with a waypoint designation data object configured to describe whether a waypoint of the route is a mandatory waypoint or an adjustment waypoint. In various embodiments, the means for updating the route with respect to the particular waypoint according to the modification are further configured for updating the waypoint designation data object associated with the route to describe the particular waypoint as a mandatory waypoint.

In various embodiments, the apparatus further includes means for receiving an indication of an addition of a second constraint area, means for determining whether the second revised route intersects with the second constraint area, and means for generating, in accordance with a determination that the second revised route intersects with the second constraint area, at least one additional waypoint so as to generate a third revised route that does not intersect with the first constraint area and the second constraint area. In various embodiments, the apparatus further includes means for receiving an indication of a removal of a particular constraint area, and means for removing one or more particular adjustment waypoints that were generated in accordance with a determination that a respective route intersected with the particular constraint area.

In various embodiments, the modification to the route includes (i) an addition of the particular waypoint to the sequence of one or more waypoints, (ii) a re-location of the particular waypoint, the particular waypoint being one of the sequence of one or more waypoints, or (iii) a deletion of the particular waypoint from the sequence of one or more waypoints. In various embodiments, the means for generating at least one additional adjustment waypoint are configured to use one or more pathfinding techniques to optimize the second revised route. In various embodiments, the request defining a modification to the route is received responsive to user interaction with a displayed rendering of the sequence of one or more waypoints of the route.

According to yet another aspect of the present disclosure, another apparatus is provided. The apparatus includes at least one processor and at least one memory including computer program code. The at least one memory and the computer program code are configured to, with the at least one processor, cause the apparatus to receive a request defining a modification to a route including a sequence of one or more waypoints, the modification identifying a particular waypoint and to update the route with respect to the particular waypoint according to the modification. A waypoint of the route is either a mandatory waypoint or an adjustment waypoint. The at least one memory and the computer program code are further configured to, with the at least one processor, cause the apparatus to remove one or more adjustment waypoints that precede and/or succeed the particular waypoint from the route so as to generate a first revised route that does not include the one or more adjustment waypoints that precede and/or succeed the particular waypoint. The at least one memory and the computer program code are further configured to, with the at least one processor, cause the apparatus to determine whether the first revised route intersects with a constraint area and to generate, in accordance with a determination that the first revised route intersects with the constraint area, at least one additional adjustment waypoint that is positioned outside of the constraint area so as to generate a second revised route that does not intersect with the constraint area.

In various embodiments, the at least one memory and the computer program code are further configured to, with the at least one processor, cause the apparatus to cause provision of the second revised route to an autonomous vehicle to direct the autonomous vehicle to navigate according to the second revised route. In various embodiments, the at least one memory and the computer program code are further configured to, with the at least one processor, cause the apparatus to render the second revised route and the constraint area for display.

In various embodiments, the route is associated with a waypoint designation data object configured to describe whether a waypoint of the route is a mandatory waypoint or an adjustment waypoint. In various embodiments, updating the route with respect to the particular waypoint according to the modification includes updating the waypoint designation data object associated with the route to describe the particular waypoint as a mandatory waypoint.

In various embodiments, the at least one memory and the computer program code are further configured to, with the at least one processor, cause the apparatus to receive an indication of an addition of a second constraint area, determine whether the second revised route intersects with the second constraint area, and in accordance with a determination that the second revised route intersects with the second constraint area, generate at least one additional waypoint so as to generate a third revised route that does not intersect with the first constraint area and the second constraint area. In various embodiments, the at least one memory and the computer program code are further configured to, with the at least one processor, cause the apparatus to receive an indication of a removal of a particular constraint area, and remove one or more particular adjustment waypoints that were generated in accordance with a determination that a respective route intersected with the particular constraint area.

In various embodiments, the modification to the route includes (i) an addition of the particular waypoint to the sequence of one or more waypoints, (ii) a re-location of the particular waypoint, the particular waypoint being one of the sequence of one or more waypoints, or (iii) a deletion of the particular waypoint from the sequence of one or more waypoints. In various embodiments, the at least one additional adjustment waypoint is generated using one or more pathfinding techniques configured to optimize the second revised route. In various embodiments, the request defining a modification to the route is received responsive to user interaction with a displayed rendering of the sequence of one or more waypoints of the route.

According to yet another aspect of a present disclosure, a computer program product is provided. The computer program product includes a non-transitory computer readable storage medium having program code portions stored thereon. The program code portions are configured, upon execution, to receive a request defining a modification to a route including a sequence of one or more waypoints, the modification identifying a particular waypoint, and to update the route with respect to the particular waypoint according to the modification. The program code portions are further configured, upon execution, to remove one or more adjustment waypoints that precede and/or succeed the particular waypoint from the route so as to generate a first revised route that does not include the one or more adjustment waypoints that precede and/or succeed the particular waypoint. The program code portions are further configured, upon execution, to determine whether the first revised route intersects with a constraint area, and in accordance with a determination that the first revised route intersects with the constraint area, to generate at least one additional adjustment waypoint that is positioned outside of the constraint area so as to generate a second revised route that does not intersect with the constraint area.

In various embodiments, the program code portions are further configured, upon execution, to further cause provision of the second revised route to an autonomous vehicle to direct the autonomous vehicle to navigate according to the second revised route. In various embodiments, the program code portions are further configured, upon execution, to render the second revised route and the constraint area for display.

In various embodiments, the route is associated with a waypoint designation data object configured to describe whether a waypoint of the route is a mandatory waypoint or an adjustment waypoint. In various embodiments, updating the route with respect to the particular waypoint according to the modification includes updating the waypoint designation data object associated with the route to describe the particular waypoint as a mandatory waypoint.

In various embodiments, the program code portions are further configured, upon execution, to receive an indication of an addition of a second constraint area, determine whether the second revised route intersects with the second constraint area, and in accordance with a determination that the second revised route intersects with the second constraint area, generate at least one additional waypoint so as to generate a third revised route that does not intersect with the first constraint area and the second constraint area. In various embodiments, the program code portions are further configured, upon execution, to receive an indication of a removal of a particular constraint area, and remove one or more particular adjustment waypoints that were generated in accordance with a determination that a respective route intersected with the particular constraint area.

In various embodiments, the modification to the route includes (i) an addition of the particular waypoint to the sequence of one or more waypoints, (ii) a re-location of the particular waypoint, the particular waypoint being one of the sequence of one or more waypoints, or (iii) a deletion of the particular waypoint from the sequence of one or more waypoints. In various embodiments, the at least one additional adjustment waypoint is generated using one or more pathfinding techniques configured to optimize the second revised route. In various embodiments, the request defining a modification to the route is received responsive to user interaction with a displayed rendering of the sequence of one or more waypoints of the route.

According to another aspect of the present disclosure, a computer-implemented method is provided. The method includes receiving a first request defining a route comprising a sequence of one or more waypoints and determining whether a part of the route intersects with a constraint area. The method further includes, in accordance with a determination that the part of the route intersects with the constraint area, generating at least one adjustment waypoint that is positioned outside of the constraint area for the route such that the route does not intersect with the constraint area. The method further includes modifying a location associated with one waypoint of the sequence of one or more waypoints according to a second request. The method further includes causing modification of a particular adjustment waypoint that precedes and/or succeeds the modified one waypoint in the sequence of one or more waypoints to cause generation of a revised route.

In various embodiments, the method further includes causing provision of the revised route to an autonomous vehicle to direct the autonomous vehicle to navigate according to the revised route. In various embodiments, the method further includes rendering the revised route and the constraint area for display.

In various embodiments, the route is associated with a waypoint designation data object configured to describe whether a waypoint of the route is an adjustment waypoint. In various embodiments, the one waypoint is an adjustment waypoint, and modifying the location associated with the one waypoint includes updating the waypoint designation data object to describe the one waypoint as a mandatory waypoint.

In various embodiments, the method further includes receiving an indication of an addition of a second constraint area and determining whether a part of the revised route intersects with the second constraint area. The method further includes, in accordance with a determination that the part of the revised route intersects with the second constraint area, generating at least one additional adjustment waypoint to cause generation of a second revised route that does not intersect with the constraint area and the second constraint area. In various embodiments, the method further includes receiving an indication of a removal of a particular constraint area and removing one or more particular adjustment waypoints that were generated in accordance with a determination that a respective route intersected with the particular constraint area.

In various embodiments, the at least one adjustment waypoint is generated using one or more pathfinding techniques configured to optimize the route. In various embodiments, the second request is received responsive to user interaction with a displayed rendering of the sequence of one or more waypoints of the route.

According to another aspect of the present disclosure, an apparatus is provided. The apparatus includes means for receiving a first request defining a route comprising a sequence of one or more waypoints and means for determining whether a part of the route intersects with a constraint area. The apparatus further includes means for generating, in accordance with a determination that the part of the route intersects with the constraint area, at least one adjustment waypoint that is positioned outside of the constraint area for the route such that the route does not intersect with the constraint area. The apparatus further includes means for modifying a location associated with one waypoint of the sequence of one or more waypoints according to a second request. The apparatus further includes means for causing modification of a particular adjustment waypoint that precedes and/or succeeds the modified one waypoint in the sequence of one or more waypoints to cause generation of a revised route.

In various embodiments, the apparatus further includes means for causing provision of the revised route to an autonomous vehicle to direct the autonomous vehicle to navigate according to the revised route. In various embodiments, the apparatus further includes means for rendering the revised route and the constraint area for display.

In various embodiments, the route is associated with a waypoint designation data object configured to describe whether a waypoint of the route is an adjustment waypoint. In various embodiments, the one waypoint is an adjustment waypoint, and modifying the location associated with the one waypoint includes updating the waypoint designation data object to describe the one waypoint as a mandatory waypoint.

In various embodiments, the apparatus further includes means for receiving an indication of an addition of a second constraint area and means for determining whether a part of the revised route intersects with the second constraint area. The apparatus further includes means for generating, in accordance with a determination that the part of the revised route intersects with the second constraint area, at least one additional adjustment waypoint to cause generation of a second revised route that does not intersect with the constraint area and the second constraint area. In various embodiments, the apparatus further includes means for receiving an indication of a removal of a particular constraint area and means for removing one or more particular adjustment waypoints that were generated in accordance with a determination that a respective route intersected with the particular constraint area.

In various embodiments, the at least one adjustment waypoint is generated using one or more pathfinding techniques configured to optimize the route. In various embodiments, the second request is received responsive to user interaction with a displayed rendering of the sequence of one or more waypoints of the route.

According to another aspect of the present disclosure, another apparatus is provided, the apparatus including at least one processor and at least one memory including computer program code. The at least one memory and the computer program code are configured to, with the at least one processor, cause the apparatus to receive a first request defining a route comprising a sequence of one or more waypoints and to determine whether a part of the route intersects with a constraint area. The at least one memory and the computer program code are further configured to, with the at least one processor, cause the apparatus to generate, in accordance with a determination that the part of the route intersects with the constraint area, at least one adjustment waypoint that is positioned outside of the constraint area for the route such that the route does not intersect with the constraint area. The at least one memory and the computer program code are further configured to, with the at least one processor, cause the apparatus to modify a location associated with one waypoint of the sequence of one or more waypoints according to a second request. The at least one memory and the computer program code are further configured to, with the at least one processor, cause the apparatus to cause modification of a particular adjustment waypoint that precedes and/or succeeds the modified one waypoint in the sequence of one or more waypoints to cause generation of a revised route.

In various embodiments, the at least one memory and the computer program code are further configured to, with the at least one processor, cause the apparatus to cause provision of the revised route to an autonomous vehicle to direct the autonomous vehicle to navigate according to the revised route. In various embodiments, the at least one memory and the computer program code are further configured to, with the at least one processor, cause the apparatus to render the revised route and the constraint area for display.

In various embodiments, the route is associated with a waypoint designation data object configured to describe whether a waypoint of the route is an adjustment waypoint. In various embodiments, the one waypoint is an adjustment waypoint, and modifying the location associated with the one waypoint includes updating the waypoint designation data object to describe the one waypoint as a mandatory waypoint.

In various embodiments, the at least one memory and the computer program code are further configured to, with the at least one processor, cause the apparatus to receive an indication of an addition of a second constraint area and to determine whether a part of the revised route intersects with the second constraint area. The at least one memory and the computer program code are further configured to, with the at least one processor, cause the apparatus to generate, in accordance with a determination that the part of the revised route intersects with the second constraint area, at least one additional adjustment waypoint to cause generation of a second revised route that does not intersect with the constraint area and the second constraint area. In various embodiments, the at least one memory and the computer program code are further configured to, with the at least one processor, cause the apparatus to receive an indication of a removal of a particular constraint area and to remove one or more particular adjustment waypoints that were generated in accordance with a determination that a respective route intersected with the particular constraint area.

In various embodiments, the at least one adjustment waypoint is generated using one or more pathfinding techniques configured to optimize the route. In various embodiments, the second request is received responsive to user interaction with a displayed rendering of the sequence of one or more waypoints of the route.

According to another aspect of the present disclosure, a computer program product is provided, the computer program product including a non-transitory computer readable storage medium having program code portions stored thereon. The program code portions are configured, upon execution, to receive a first request defining a route comprising a sequence of one or more waypoints and to determine whether a part of the route intersects with a constraint area. The program code portions are further configured, upon execution, to generate, in accordance with a determination that the part of the route intersects with the constraint area, at least one adjustment waypoint that is positioned outside of the constraint area for the route such that the route does not intersect with the constraint area. The program code portions are further configured, upon execution, to modify a location associated with one waypoint of the sequence of one or more waypoints according to a second request. The program code portions are further configured, upon execution, to cause modification of a particular adjustment waypoint that precedes and/or succeeds the modified one waypoint in the sequence of one or more waypoints to cause generation of a revised route.

In various embodiments, the program code portions are further configured, upon execution, to cause provision of the revised route to an autonomous vehicle to direct the autonomous vehicle to navigate according to the revised route. In various embodiments, the program code portions are further configured, upon execution, to render the revised route and the constraint area for display.

In various embodiments, the route is associated with a waypoint designation data object configured to describe whether a waypoint of the route is an adjustment waypoint. In various embodiments, the one waypoint is an adjustment waypoint, and modifying the location associated with the one waypoint includes updating the waypoint designation data object to describe the one waypoint as a mandatory waypoint.

In various embodiments, the program code portions are configured, upon execution, to receive an indication of an addition of a second constraint area and to determine whether a part of the revised route intersects with the second constraint area. The program code portions are further configured, upon execution, to generate, in accordance with a determination that the part of the revised route intersects with the second constraint area, at least one additional adjustment waypoint to cause generation of a second revised route that does not intersect with the constraint area and the second constraint area. In various embodiments, the program code portions are further configured, upon execution, to receive an indication of a removal of a particular constraint area and to remove one or more particular adjustment waypoints that were generated in accordance with a determination that a respective route intersected with the particular constraint area.

In various embodiments, the at least one adjustment waypoint is generated using one or more pathfinding techniques configured to optimize the route. In various embodiments, the second request is received responsive to user interaction with a displayed rendering of the sequence of one or more waypoints of the route.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below. Other features, aspects, and advantages of the subject matter will become apparent from the description, the drawings, and the claims.

### BRIEF DESCRIPTION OF THE DRAWINGS

Having thus described certain example embodiments of the present disclosure in general terms above, non-limiting and non-exhaustive embodiments of the subject disclosure will now be described with reference to the accompanying drawings which are not necessarily drawn to scale. The components illustrated in the accompanying drawings may or may not be present in certain embodiments described herein. Some embodiments may include fewer (or more) components than those shown in the drawings.
Figure 1 is a block diagram of an example system architecture for constrained path planning with dynamic waypoint management, in accordance with various embodiments;
Figure 2 is a block diagram of an example apparatus configured to dynamically manage waypoints of a mission for an autonomous vehicle, in accordance with various embodiments;
Figures 3A-C illustrate dynamic waypoint management to generate revised routes for an autonomous vehicle, in accordance with various embodiments;
Figures 4A-D illustrate dynamic waypoint management to generate revised routes for an autonomous vehicle, in accordance with various embodiments;
Figure 5A-C illustrate dynamic waypoint management to generate revised routes for an autonomous vehicle, in accordance with various embodiments;
Figure 6A-D illustrate dynamic waypoint management to generate revised routes for an autonomous vehicle, in accordance with various embodiments;
Figure 7 provides a flowchart describing example operations performed for constrained path planning with dynamic waypoint management, in accordance with various embodiments;
Figure 8 illustrates an example route definition data object comprising a sequence of waypoints and an example waypoint designation data object associated with the example route definition data object, in accordance with various embodiments; and
Figure 9 provides another flowchart describing example operations performed for constrained path planning with dynamic waypoint management, in accordance with various embodiments.

### DETAILED DESCRIPTION

Some embodiments of the present disclosure will now be described more fully hereinafter with reference to the accompanying drawings, in which some, but not all, embodiments of the present disclosure are shown. Indeed, various embodiments of the present disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," "electronic information," "signal," "command," and similar terms may be used interchangeably to refer to data capable of being captured, transmitted, received, and/or stored in accordance with various embodiments of the present disclosure. Thus, use of any such terms should not be taken to limit the spirit and scope of embodiments of the present disclosure. Further, where a first computing device is described herein to receive data from a second computing device, it will be appreciated that the data may be received directly from the second computing device or may be received indirectly via one or more intermediary computing devices, such as, for example, one or more servers, relays, routers, network access points, base stations, hosts, repeaters, and/or the like, sometimes referred to herein as a "network." Similarly, where a first computing device is described herein as sending data to a second computing device, it will be appreciated that the data may be sent or transmitted directly to the second computing device or may be sent or transmitted indirectly via one or more intermediary computing devices, such as, for example, one or more servers, remote servers, cloud-based servers (e.g., cloud utilities), relays, routers, network access points, base stations, hosts, repeaters, and/or the like.

The term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of. Furthermore, to the extent that the terms "includes" and "including," and variants thereof are used in either the detailed description or the claims, these terms are intended to be inclusive in a manner similar to the term "comprising."

The phrases "in one embodiment," "according to one embodiment," "in some embodiments," "in various embodiments", and the like generally refer to the fact that the particular feature, structure, or characteristic following the phrase may be included in the at least one embodiment of the present disclosure, but not necessarily all embodiments of the present disclosure. Thus, the particular feature, structure, or characteristic may be included in more than one embodiment of the present disclosure such that these phrases do not necessarily refer to the same embodiment.

As used herein, the terms "example," "exemplary," and the like are used to mean "serving as an example, instance, or illustration." Any implementation, aspect, or design described herein as "example" or "exemplary" is not necessarily to be construed as preferred or advantageous over other implementations, aspects, or designs. Rather, use of the terms "example," "exemplary," and the like are intended to present concepts in a concrete fashion.

If the specification states a component or feature "may," "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included in some embodiments, or it may be excluded.

As used herein, the term "computer-readable medium" refers to non-transitory storage hardware, non-transitory storage device or non-transitory computer system memory that may be accessed by a controller, a microcontroller, a computational system or a module of a computational system to encode thereon computer-executable instructions or software programs. A non-transitory "computer-readable medium" may be accessed by a computational system or a module of a computational system to retrieve and/or execute the computer-executable instructions or software programs encoded on the medium. Examples of non-transitory computer-readable media may include, but are not limited to, one or more types of hardware memory, non-transitory tangible media (for example, one or more magnetic storage disks, one or more optical disks, one or more USB flash drives), computer system memory or random-access memory (such as, DRAM, SRAM, EDO RAM), and the like.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

In various instances, an autonomous vehicle is used for performing various tasks that are located at various specified locations. Thus, the autonomous vehicle must navigate between the different specified locations, and a route connecting the different specified locations may be planned for the autonomous vehicle. For example, it may be specified that the autonomous vehicle should visit the specified locations in a particular order, and the route then includes a sequence of specified locations, or waypoints. Such locations, waypoints, or routes may be provided or defined by a user for navigation of the autonomous vehicle in areas, such as oceans, lakes, deserts, or the air, with no infrastructure (e.g., roads) to guide the autonomous vehicle. In an example instance, the user defines locations or waypoints for a search pattern or a search route to be navigated by the autonomous vehicle.

As used herein, a "waypoint" refers to an intermediate point or location on a route (e.g., a path or line of travel). The waypoints of the route along which the autonomous vehicle is expected to autonomously navigate may be interspersed throughout an environment that includes one or more constraint areas. For example, a constraint area may be a No-Fly Zone, a large physical object or barrier, an untraversable and/or hostile region, a region owned or controlled by another party, another autonomous vehicle, and/or the like. Thus, a route along which the autonomous vehicle is expected to navigate must respect and account for various constraint areas. Further, a user (e.g., an operator, a tasker, some entity configuring tasks for the autonomous vehicle) may modify existing waypoints and/or constraint areas, and such modification may cause the route to no longer respect various constraint areas, in some instances.

Certain embodiments described herein then dynamically manage waypoints of a route and generate revised routes for navigation for an autonomous vehicle, and may do so while modifications are being made for the route. In various embodiments, dynamic waypoint management is performed responsive to modifications that include addition of new waypoints to a route, re-location of existing waypoints of a route, deletion of existing waypoints of a route, addition of constraint areas, removal of constraint areas, and/or the like. Dynamic waypoint management may specifically involve generation and removal of certain waypoints based at least in part on waypoint designations associated with the certain waypoints. Specifically, a waypoint may be a mandatory waypoint or an adjustment waypoint. Accordingly, various embodiments provide a waypoint designation data object associated with a route that is configured to describe the waypoint designations of waypoints of the route and to be used when dynamically managing waypoints during route modifications.

Generally, various embodiments involve receiving a request defining a route modification for a particular waypoint and updating a route based at least in part on the route modification. The particular waypoint is then defined as and/or is updated to be a mandatory waypoint. Adjustment waypoints that precede and/or succeed the particular waypoint are then removed. In one example embodiment, the adjustment waypoints that immediately and consecutively precede and succeed the particular waypoint may be removed, and as a result, the particular waypoint may be neighbored by mandatory waypoints. This removal of adjustment waypoints forms a first revised route, and the first revised route is evaluated for intersections with constraint areas. If intersections with constraint areas exist, additional waypoints are generated using pathfinding techniques to avoid the constraint areas. These additional waypoints are defined as adjustment waypoints. The addition of the additional adjustment waypoints constructs a second revised route, which may then be provided to an autonomous vehicle for navigation, rendered for display, and/or the like.

As generally described, some example implementations of dynamic waypoint management for constrained navigation involve generating revised routes (e.g., through dynamic waypoint management) for traversal by agents (e.g., physical entities such as robots or digital entities such as characters, avatars, etc.) in physical environments or in simulated digital worlds (e.g., video games). While certain embodiments herein may refer to autonomous vehicles as real-world physical entities, it is to be appreciated that the operations discussed herein may be performed with other agents, such as digital entities in a virtual setting (e.g., video game characters and/or entities, entities within a simulation, and/or the like). Furthermore, the terms "vehicles" or "autonomous vehicles" used herein may encompass any type of vehicle, semi-autonomous vehicle, partially-autonomous vehicle, or autonomous vehicle, such as autonomous robots, drones, and/or the like as well as the digital entities in a virtual setting. For example, in some embodiments, a plurality of autonomous vehicles may comprise autonomous vehicles of different types, such as autonomous vehicles, vehicles, drones, and/or the like, that may move along the route in various manners, such as by moving along the ground, flying, etc.

An embodiment described herein provides various technical advantages in enabling constrained navigation using dynamic waypoint management during route modifications. In doing so, a user may freely configure, define, specify, and/or the like modifications to a route (e.g., additional waypoints, waypoint re-locations, additional constraint areas) without needing to also adjust every existing waypoint, as the route is dynamically managed to respect and satisfy the constraint areas without explicit user input. Accordingly, user input for constrained navigation is minimized. Further, the route and waypoints thereof are dynamically revised and generated, respectively, using one or more pathfinding techniques, such that navigational and traversal efficiency is maintained when respecting and satisfying constraint areas. Efficiency is additionally improved through the removal of undesired, unnecessary, and meaningless detours that may result from route modifications.

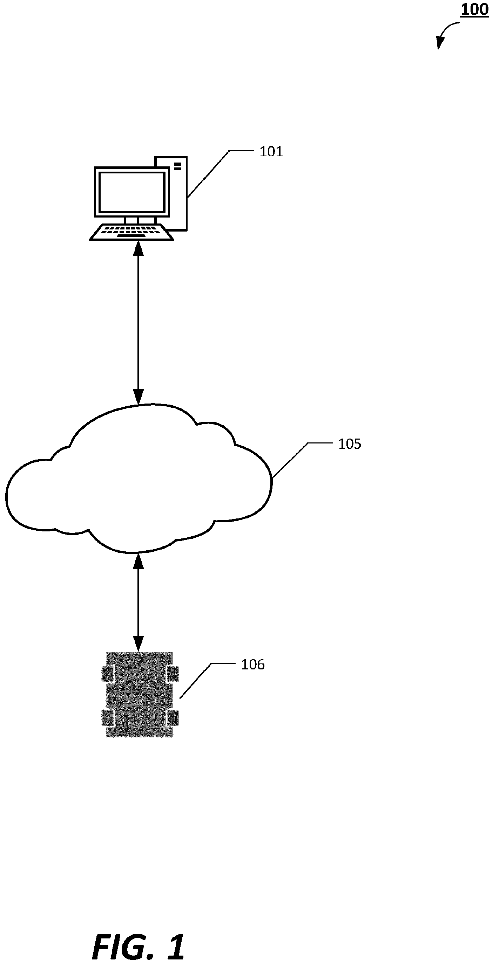

Referring now to Figure 1, an example system architecture 100 within which embodiments disclosed herein may operate is illustrated. It will be appreciated that the system architecture 100 as well as the illustrations in other figures are each provided as an example of some embodiments and should not be construed to narrow the scope or spirit of the disclosure in any way. In this regard, the scope of the disclosure encompasses many potential embodiments in addition to those illustrated and described herein. As such, while Figure 1 illustrates one example of a configuration of such a system, numerous other configurations may also be employed. In some embodiments, the system architecture 100 includes a navigation control system 101 configured to dynamically manage waypoints of a route during route modifications and generate revised routes for an autonomous vehicle 106 to navigate along and traverse. In some embodiments, the navigation control system 101 is configured to cause transmission of data, such as a data defining a route (e.g., a sequence of waypoints), to the autonomous vehicle 106, via a network 105 for example. Similarly, the navigation control system 101 is configured to receive data originating from the autonomous vehicle 106 (e.g., via the network 105), such data including positional telemetry for example. In various embodiments, the navigation control system 101 is configured to interact with more than one autonomous vehicle 106 at substantially the same time (e.g., in parallel).

In various embodiments, the navigation control system 101 is embodied by a component of, and/or the like another autonomous vehicle, such as a leader autonomous vehicle. A leader autonomous vehicle embodying the navigation control system 101 may be part of a group, unit, convey, fleet, and/or the like with the autonomous vehicle 106 for which dynamic waypoint management is provided. For example, the leader autonomous vehicle embodying the navigation control system 101 may be configured to control navigation for other autonomous vehicles 106 (e.g., through dynamic waypoint management) in a vehicle group. The leader autonomous vehicle may be communicating with a network server which may have navigation control system for providing navigation instructions. Further the network server may be located at an edge of the network.

The navigation control system 101 may communicate with the autonomous vehicle 106 and/or other external computing devices using the network 105. The network 105 may include any wired or wireless communication network including, for example, a wired or wireless local area network (LAN), personal area network (PAN), metropolitan area network (MAN), wide area network (WAN), or the like, as well as any hardware, software and/or firmware required to implement it (such as, e.g., network routers, etc.). For example, the network 105 may include a cellular telephone, a radio access architecture based on long term evolution (LTE), long term evolution advanced (LTE Advanced, LTE-A), new radio (NR, 5G), without restricting the embodiments to such an architecture, however, universal mobile telecommunications systems (UMTS), radio access network (UTRAN or E-UTRAN), long term evolution (LTE, the same as E-UTRA), an 802.11, 802.16, 802.20, and/or WiMax network. Further, the network 105 may include a public network, such as the Internet, a private network, such as an intranet, or combinations thereof, and may utilize a variety of networking protocols now available or later developed including, but not limited to Transmission Control Protocol/Internet Protocol (TCP/IP) based networking protocols. For instance, in some examples, the networking protocol may be customized to suit the needs of the navigation control system 101.

As discussed, the navigation control system 101 may be embodied by another autonomous vehicle, such as a leader autonomous vehicle, in various example embodiments. In such embodiments, the autonomous vehicles (e.g., the navigation control system 101 and the autonomous vehicle 106 for which dynamic waypoint management is provided) may communicate via a specialized or designated network unique to a group of autonomous vehicles. For example, the network 105 may be an ad hoc network for communication between autonomous vehicles, such as being a leader autonomous vehicle embodying a navigation control system 101 and providing dynamic waypoint management and navigation for another autonomous vehicle 106. In various embodiments, communication between the leader autonomous vehicle and another autonomous vehicle 106 may be sidelink communications . That is, the autonomous vehicles may communicate relatively directly with one another instead of communicating through a radio access network. In various embodiments, communication between the leader autonomous vehicle embodying the navigation control system 101 and an autonomous vehicle 106 having waypoints dynamically managed by the leader autonomous vehicle is enabled through a 5G New Radio network configured for sidelink communications between devices. In such embodiments, communication between the leader autonomous vehicle and the autonomous vehicle 106 does not require relaying of data via a radio access network.

In various embodiments, the navigation control system 101 and the autonomous vehicle 106 are configured for multi-access edge computing, enabling fast and relatively direct communication between the navigation control system 101 and the autonomous vehicle 106. The navigation control system 101 may be located at the edge of the network resulting fast communication to and from the autonomous vehicle.

In some embodiments, the navigation control system 101 is configured to receive route modifications for the autonomous vehicle 106 and to generate revised routes responsive to the route modifications using dynamic waypoint management. For instance, the navigation control system 101 is configured to store, retrieve, receive, access, generate, update, and/or the like a waypoint designation data object for a route being modified in order to perform dynamic waypoint management, including updating a modified adjustment waypoint to be a mandatory waypoint, identifying adjustment waypoints for removal, adding additional adjustment waypoints, and/or the like.

In order to generate revised routes that respect and satisfy various constraint areas (e.g., revised routes for constrained navigation), the navigation control system 101 may be configured to store, retrieve, receive, access, and/or the like information associated with an environment and one or more constraint areas thereof (e.g., positioned within). For example, a route is specified in a mission area or region, and the navigation control system 101 is configured to identify one or more constraint areas (e.g., No-Fly-Zones, physical barriers or objects, flight paths of other vehicles) in the mission area or region. Specifically, the navigation control system 101 is configured to identify coordinates of a constraint area, borders of a constraint area, and/or the like. In this regard, the navigation control system 101 is also configured to access, store, and/or reference one or more digital maps with coordinate or reference systems, such that the navigation control system 101 can process relative locations and distances between waypoints and/or constraint areas.

Further, the navigation control system 101 is configured for performing one or more pathfinding techniques. For example, the navigation control system 101 comprises a pathfinding module, path planning circuitry, and/or the like configured for performing operations to optimize different route segments between a set or a sequence of waypoints. For example, the navigation control system 101 is configured for performing operations in accordance with Dijkstra's algorithm, the A* algorithm, the sample algorithm, brute force methods, and/or the like.

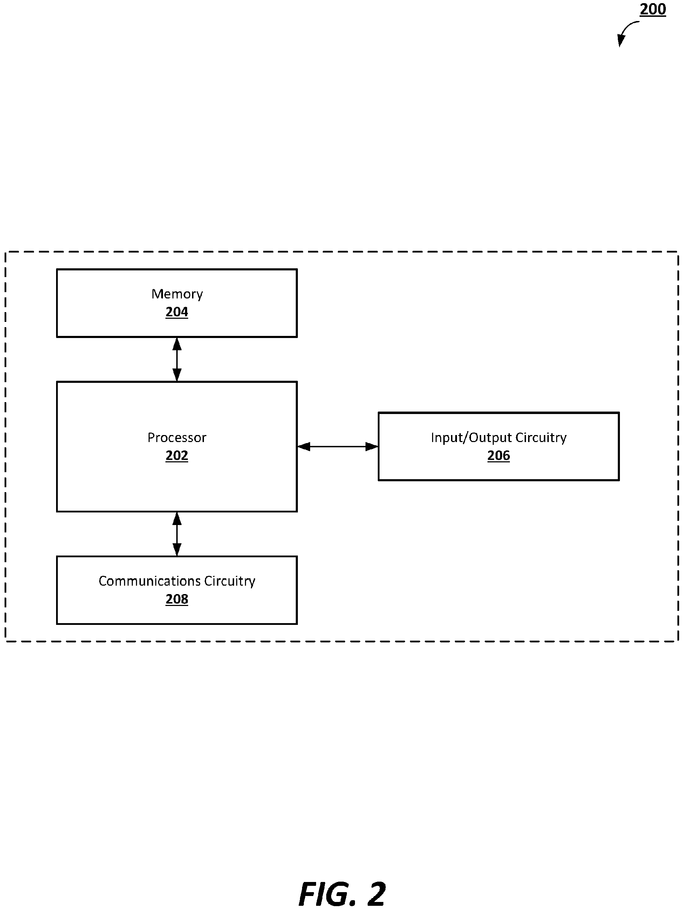

The navigation control system 101 and/or the autonomous vehicle 106 may be embodied by one or more computing systems, such as apparatus 200 shown in Figure 2. In some embodiments, the navigation control system 101 and the autonomous vehicle 106 may be embodied together as one computing system, in that the autonomous vehicle 106 may be configured for dynamic waypoint management and generating revised routes that respect and satisfy constraint areas. The apparatus 200 may include processor 202, memory 204, input/output circuitry 206, and communications circuitry 208. The apparatus 200 may be configured to execute the operations described herein. Although these components 202-208 are described with respect to functional limitations, it should be understood that the particular implementations necessarily include the use of particular hardware. It should also be understood that certain of these components 202-208 may include similar or common hardware. For example, two sets of circuitries may both leverage use of the same processor, network interface, storage medium, or the like to perform their associated functions, such that duplicate hardware is not required for each set of circuitries.

In some embodiments, the processor 202 (and/or co-processor or any other processing circuitry assisting or otherwise associated with the processor) may be in communication with the memory 204 via a bus for passing information among components of the apparatus. The memory 204 is non-transitory and may include, for example, one or more volatile and/or non-volatile memories. In other words, for example, the memory 204 may be an electronic storage device (e.g., a computer-readable storage medium). The memory 204 may be configured to store information, data, content, applications, instructions, or the like for enabling the apparatus to carry out various functions in accordance with an example embodiment disclosed herein.

The processor 202 may be embodied in a number of different ways and may, for example, include one or more processing devices configured to perform independently. In some preferred and non-limiting embodiments, the processor 202 may include one or more processors configured in tandem via a bus to enable independent execution of instructions, pipelining, and/or multithreading. The use of the term "processor" may be understood to include a single core processor, a multi-core processor, multiple processors internal to the apparatus, and/or remote or "cloud" processors.

In some embodiments, the processor 202 may be configured to execute instructions stored in the memory 204 and/or circuitry otherwise accessible to the processor 202, such as interactions for various operations for dynamic waypoint management during route modifications for constrained navigation. In some embodiments, the processor 202 may be configured to execute hard-coded functionalities. As such, whether configured by hardware or software methods, or by a combination thereof, the processor 202 may represent an entity (e.g., physically embodied in circuitry) capable of performing operations according to an embodiment disclosed herein while configured accordingly. Alternatively, as another example, when the processor 202 is embodied as an executor of software instructions, the instructions may specifically configure the processor 202 to perform the algorithms and/or operations described herein when the instructions are executed.

In some embodiments, the apparatus 200 may include input/output circuitry 206 that may, in turn, be in communication with processor 202 to provide output to a user and/or other entity and, in some embodiments, to receive an indication of an input. The input/output circuitry 206 may comprise a user interface and may include a display, and may comprise a web user interface, a mobile application, a query-initiating computing device, a kiosk, or the like. In some embodiments, the input/output circuitry 206 may also include a keyboard, a mouse, a joystick, a touch screen, touch areas, soft keys, a microphone, a speaker, or other input/output mechanisms. The processor and/or user interface circuitry comprising the processor may be configured to control one or more functions of one or more user interface elements through computer program instructions (e.g., software and/or firmware) stored on a memory accessible to the processor (e.g., memory 204, and/or the like).

The communications circuitry 208 may be any means such as a device or circuitry embodied in either hardware or a combination of hardware and software that is configured to receive and/or transmit data from/to a network and/or any other device, circuitry, or module in communication with the apparatus 200. In this regard, the communications circuitry 208 may include, for example, a network interface for enabling communications with a wired or wireless communication network. For example, the communications circuitry 208 may include one or more network interface cards, antennae, buses, switches, routers, modems, and supporting hardware and/or software, or any other device suitable for enabling communications via a network. Additionally, or alternatively, the communications circuitry 208 may include the circuitry for interacting with the antenna/antennae to cause transmission of signals via the antenna/antennae or to handle receipt of signals received via the antenna/antennae.

It is also noted that all or some of the information discussed herein can be based on data that is received, generated and/or maintained by one or more components of apparatus 200. In some embodiments, one or more external systems (such as a remote cloud computing and/or data storage system) may also be leveraged to provide at least some of the functionality discussed herein.

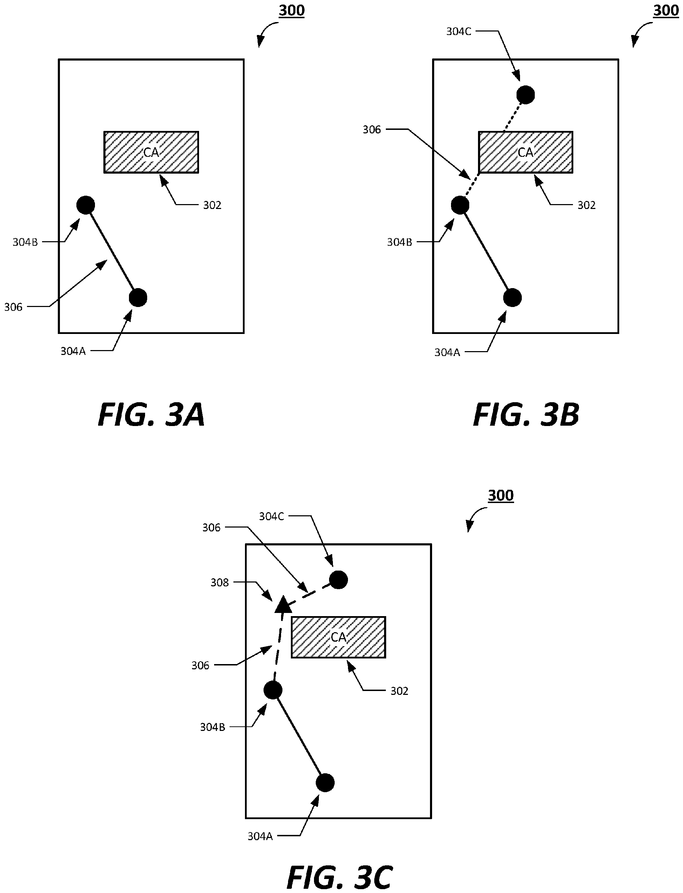

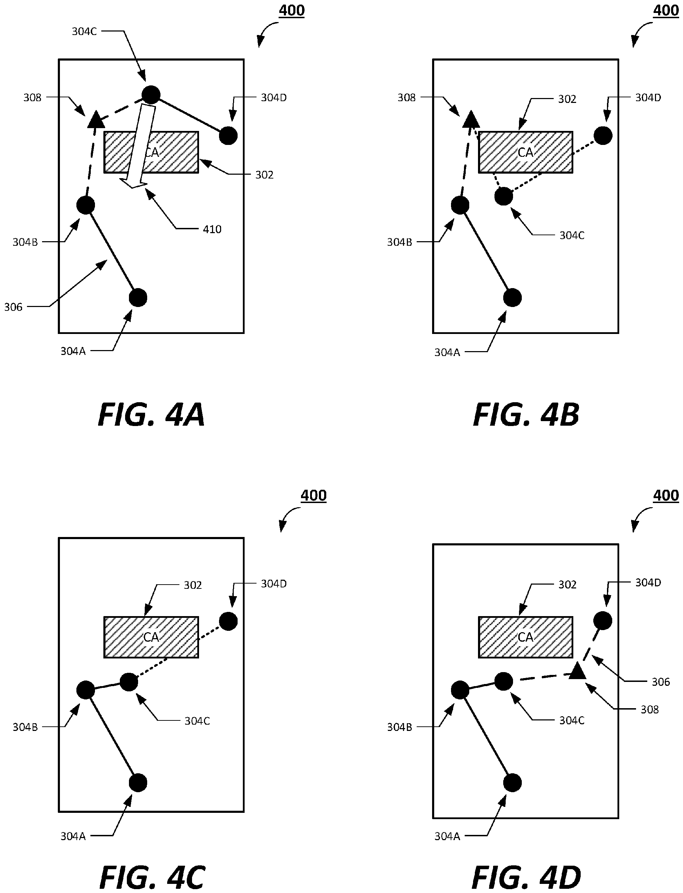

Figures 3A-C illustrate example operations performed for dynamic waypoint management during modification to a route including a sequence of waypoints 304 in a particular area or environment 300. Relative positions of waypoints and constraint areas as illustrated in Figures 3A-C and also illustrated in Figures 4A-D, Figures 5A-C, and Figures 6A-D are exemplary and should not be construed as limiting. Additionally, illustrated waypoints and constraint areas may be interpreted from any point of view. For example, in a first exemplary interpretation, Figure 3A illustrates a plan view, sky view, bird's-eye view, and/or the like of an environment 300. As another example, in another exemplary interpretation, Figure 3A illustrates a side view of the environment 300, and/or the environment 300 is vertically oriented.

In the illustrated embodiment, the environment 300 comprises a constraint area 302. In Figure 3A, the route spans two waypoints: a first waypoint 304A and a second waypoint 304B. Both the first waypoint 304A and the second waypoint 304B are mandatory waypoints (e.g., indicated by a circle). A mandatory waypoint may refer to a waypoint that is a specified location that the autonomous vehicle 106 must be at, for example, to do a task, and the mandatory waypoint may be specified or defined by a user, in some examples. In some embodiments, a mandatory waypoint is associated with some action, function, or task to be performed by the autonomous vehicle 106. The route is further composed of a route segment306 that connects the two waypoints and along which an autonomous vehicle may navigate or traverse.

In Figure 3B, a modification to the route is illustrated, the modification being the addition of a third waypoint 304C. As the third waypoint 304C is the subject of the modification, the third waypoint 304C is defined as a mandatory waypoint. Figure 3B illustrates that a route segment 306 that would connect the third waypoint 304C with the second waypoint 304B intersects with the constraint area 302, and thus, such a route segment 306 is invalid (e.g., indicated by a dotted line).

In various embodiments, the addition of the third waypoint 304C may be explicitly defined by the user, such as by defining exact coordinates and/or a location for the third waypoint 304C. In some instances, the addition of the third waypoint 304C may be responsive to various other user input or interaction, such as the definition of an additional task to be performed by the autonomous vehicle at a location. In some examples, the third waypoint 304C may be added based at least in part on the user using a cursor to drag a rendering of the route or a route segment to a location. In some other example instances, a touchscreen display can be used instead of using a cursor to drag a route or a route segment. Thus, in example instances, the user is enabled through various mechanisms to specify the addition of new waypoints 304 to a route. In another example instance, the addition of the third waypoint 304 is prompted by the autonomous vehicle and/or external factors. For example, the third waypoint 304 is a home location or a refueling station and is added based at least in part on a determination that the autonomous vehicle should return home or should refuel.

Figure 3C illustrates the dynamic generation of an additional waypoint due to the invalidity of the route segment 306 between the second waypoint 304B and the third waypoint 304C. In particular, a waypoint is generated between the second waypoint 304B and the third waypoint 304C, and the generated waypoint is specifically designated as an adjustment waypoint 308 (e.g., indicated by a triangle). an adjustment waypoint 308 may refer to a waypoint specifically generated to respect, satisfy, account for, and/or the like a constraint area 302, and in at least some instances in which multiple constraint areas 302 are positioned within the environment 300, an adjustment waypoint 308 may be associated with data identifying a particular constraint area 302 for which the adjustment waypoint 308 was generated, in some embodiments. Thus, an adjustment waypoint 308 may not be associated with a particular action, function, or task to be performed by the autonomous vehicle 106 and may not be defined explicitly by a user, in contrast with a mandatory waypoint. It may then be understood that a primary purpose of the adjustment waypoint 308 is navigational.

In some example instances, an adjustment waypoint 308 may be a temporary waypoint, and a constraint area 302 causing the generation of the adjustment waypoint 308 may only be temporarily or periodically positioned within the environment 300. In some embodiments, the adjustment waypoint 308 may be associated with temporal data, such that at a first timepoint at which the constraint area 302 exists, a first route including the adjustment waypoint 308 is provided and at a second timepoint at which the constraint area 302 does not exist, a second route not including the adjustment waypoint 308 is provided. That is, in some embodiments, an adjustment waypoint 308 may be temporary and may be dynamically provided at different points in time based at least in part on an associated constraint area 302.

As shown in Figure 3C, the adjustment waypoint 308 is positioned outside of the constraint area 302, such that the route segments 306 that result from the addition of the adjustment waypoint 308 do not intersect with the constraint area 302 (e.g., indicated by dashed lines). Thus, with the addition of the adjustment waypoint 308, a first revised route is constructed, the first revised route respecting and satisfying the constraint area 302. In various embodiments, the adjustment waypoint 308 is specifically positioned relative to the constraint area 302, the second waypoint 304B, and the third waypoint 304C, such that both a route segment 306 between the second waypoint 304B and the adjustment waypoint 308 and a route segment 306 between the adjustment waypoint 308 and the third waypoint 304C are optimized. For example, the adjustment waypoint 308 may be specifically positioned using one or more pathfinding techniques, one or more minimization techniques, one or more optimization techniques, and/or the like.

In various embodiments, the adjustment waypoint 308 is positioned based at least in part on various properties or rules associated with the constraint area 302. Assuming a side view of the environment 300 in Figure 3C, for example, the constraint area 302 may be associated with a rule that adjustment waypoints 308 cannot be generated below the altitude of the constraint area 302, and as such, the adjustment waypoint 308 illustrated in Figure 3C is generated above the altitude of the constraint area 302. In various embodiments, a constraint area 302 may be associated with similar various rules, such as limiting positioning of adjustment waypoints 308 to a particular side or face of the constraint area 302. In various embodiments, a constraint area 302 may be associated with a rule indicating a minimum distance that must be maintained between an adjustment waypoint 308 and the constraint area 302.

Further, in various embodiment, presence of other constraint areas 302 may be additionally accounted for when positioning the adjustment waypoint 308. For example, although not explicitly illustrated, the constraint area 302 illustrated in Figure 3C may be neighbored by multiple other constraint areas 302 on its right side, and as such, the adjustment waypoint 308 is positioned on the left side of the constraint area 302, as illustrated in Figure 3C. That is, in various embodiments, an adjustment waypoint 308 may be generated and positioned based at least in part on regional densities of constraint areas 302.

In some example instances, a user may add a mandatory waypoint within a constraint area 302. In such instances, a notification may be automatically generated and provided to the user to indicate that a mandatory waypoint cannot be positioned within the constraint area 302. Further, in some embodiments, an adjustment waypoint 308 may be automatically generated outside the constraint area 302 to replace the mandatory waypoint added by the user. The adjustment waypoint 308 that is generated responsive to the user adding a mandatory waypoint within a constraint area 302 may be positioned outside the constraint area 302 to minimize route length outside of the constraint area 302. Referring to Figure 3A again, addition of a mandatory waypoint within the constraint area 302 may result in an adjustment waypoint 308 being positioned outside the constraint area 302 and below or South of the constraint area 302, for example, such that the route from the second waypoint 304B to the adjustment waypoint 308 is minimized.

Figures 4A-D illustrate example operations performed for dynamic waypoint management during modification to a route in an environment 400 that includes a constraint area 302. Figure 4A illustrates the route being comprised of four mandatory waypoints (e.g., a first waypoint 304A, a second waypoint 304B, a third waypoint 304C, a fourth waypoint 304D) and an adjustment waypoint 308 between the second waypoint 304B and the third waypoint 304C. With the adjustment waypoint 308, the route may be a revised route, similar to the revised route illustrated in Figure 3C. Accordingly, the route illustrated in Figure 4A does not intersect with the constraint area 302 due to the adjustment waypoint 308. Figure 4A further illustrates a request or an indication of a modification being made to the route, the modification being a re-location 410 of the third waypoint 304C. Specifically, the modification involves the re-location 410 of the third waypoint 304C to an opposite side of the constraint area 302.

Figure 4B then illustrates the route being updated according to the re-location 410 of the third waypoint 304C. As shown, the re-location 410 of the third waypoint 304C results in both a route segment 306 between the adjustment waypoint 308 and the third waypoint 304C and a route segment 306 between the third waypoint 304C and the fourth waypoint 304D intersecting with the constraint area 302. Further, the adjustment waypoint 308 may be unnecessary following the re-location 410 of the third waypoint 304C, as the adjustment waypoint 308 was generated due to a route segment between the second waypoint 304B and the third waypoint 304C previously intersecting with the constraint area 302. That is, the adjustment waypoint 308 introduces an unnecessary and meaningless detour to the route. As also previously discussed, the adjustment waypoint 308 may not be explicitly defined by the user and may not be associated with a particular action, function, or task to be performed by the autonomous vehicle 106 to be performed at the adjustment waypoint 308.

Thus, the modification to the route (e.g., re-location 410 of the third waypoint 304C) causes the route to intersect with the constraint area 302, as well as introduces unnecessary and meaningless detours through existing adjustment waypoints 308 to the route. As such, in various embodiments, adjustment waypoints 308 that precede and/or succeed a waypoint identified in a modification (e.g., the third waypoint 304C being re-located) are removed from the route. Specifically, adjustment waypoints 308 that immediately and consecutively precede and/or succeed, that is, follow, the waypoint are removed. For example, for the re-location 410 of the third waypoint 304C, any adjustment waypoints 308 between the second waypoint 304B and the third waypoint 304C are removed, as are any adjustment waypoints 308 between the third waypoint 304C and the fourth waypoint 304D. In some examples, more than one adjustment waypoint 308 may be between the second waypoint 304B and the third waypoint 304C to respect the constraint area 302, and re-location 410 of the third waypoint 304C causes each adjustment waypoint 308 to be removed.

Figure 4C illustrates the removal of the adjustment waypoint 308 between the second waypoint 304B and the third waypoint 304C, such a removal forming a first revised route. As shown, the first revised route includes a route segment 306 then connects the second waypoint 304B and the third waypoint 304C, and the third waypoint 304C is neighbored by mandatory waypoints (e.g., second waypoint 304B, fourth waypoint 304D). Subsequent to removal of the adjustment waypoint 308, the first revised route intersects with the constraint area 302. Accordingly, dynamic waypoint management similar to that illustrated in Figures 3A-C may be performed to generate a second revised route that respects and satisfies the constraint area 302.

Figure 4D illustrates the generation of an additional adjustment waypoint 308 to construct a second revised route respecting and satisfying the constraint area 302. As the route segment 306 between the third waypoint 304C and the fourth waypoint 304D intersects the constraint area 302, the additional adjustment waypoint 308 is between the third waypoint 304C and the fourth waypoint 304D and positioned outside of the constraint area 302. Thus, the generation of the additional adjustment waypoint 308 results in a new route that does not intersect the constraint area 302. It will be understood that while only one additional adjustment waypoint 308 is generated in the illustrated embodiment, any number of additional adjustment waypoints 308 may be generated to form a second revised route respecting and satisfying the constraint area 302, with multiple adjustment waypoints 308 being generated and positioned according to one or more pathfinding techniques, minimization techniques, optimization techniques, and/or the like.

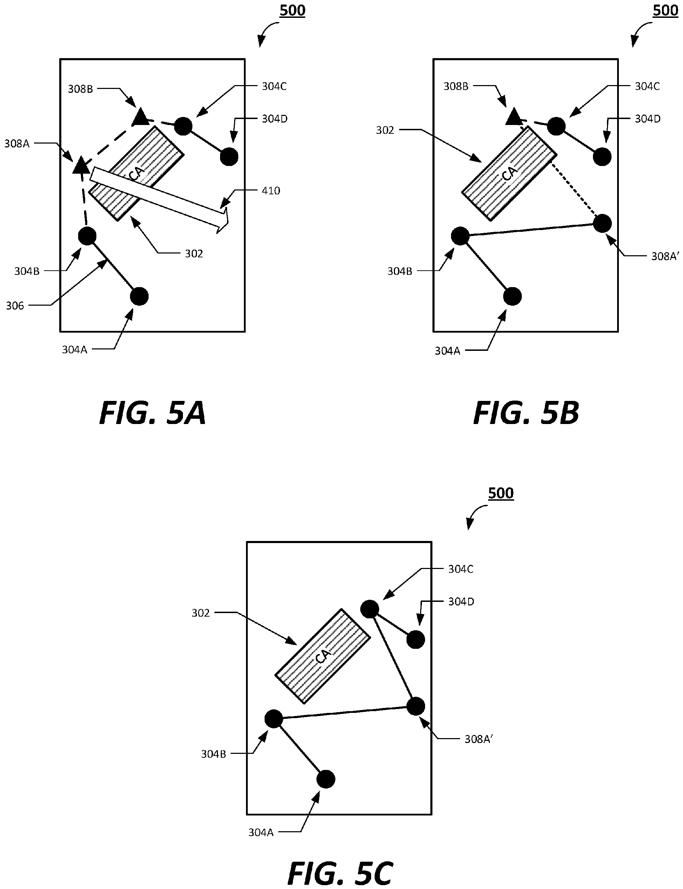

While Figures 4A-D illustrate example operations performed for dynamic waypoint management during re-location 410 of the third waypoint 304C, the third waypoint 304C being a mandatory waypoint, Figures 5A-C illustrate example operations performed for dynamic waypoint management during re-location 410 of an adjustment waypoint 308. First, Figure 5A illustrates a route in which two adjustment waypoints (e.g., a first adjustment waypoint 308A, a second adjustment waypoint 308B) are generated between a second waypoint 304B and a third waypoint 304C, the route respecting and satisfying a constraint area 302. Figure 5A further illustrates a request or an indication of a modification being made to the route, the modification being a re-location 410 of the first adjustment waypoint 308A.

Figure 5B illustrates the route being updated according to the re-location 410 of the first adjustment waypoint 308A. In various embodiments, re-location 410 of an adjustment waypoint 308 causes the adjustment waypoint 308 to be designated as a mandatory waypoint. This change in designation may be based at least in part on an assumption that the modification (e.g., the re-location 410) is specified and requested by a user, such as a user with the final authority over navigation of the autonomous vehicle 106. For example, the route illustrated in Figure 5A is provided as a suggestion or recommendation, and the user indicates a different preference by modifying and re-locating a waypoint. Thus, as shown in Figure 5B, re-location 410 of the first adjustment waypoint 308A (e.g., indicated by a triangle) results in a respective mandatory waypoint 308A' (e.g., indicated by a circle similar to other mandatory waypoints).

As previously discussed, modification to a particular waypoint (e.g., re-location 410 of the first adjustment waypoint 308A) results in removal of adjustment waypoints that immediately and consecutively precede and/or succeed the particular waypoint. In the illustrated embodiment, the second adjustment waypoint 308B succeeds the first adjustment waypoint 308A, which is being modified, and as such, the second adjustment waypoint 308B is removed. Figure 5C accordingly illustrates a first revised route in which the second adjustment waypoint 308B has been removed. The first revised route in the illustrated embodiment of Figure 5C does not intersect with the constraint area 302. Accordingly, additional adjustment waypoints 308 do not need to be generated, and the first revised route may be provided to an autonomous vehicle for navigation and traversal, rendered for display for a user (e.g., the user requesting the re-location 410 of the first adjustment waypoint 308A), and/or the like.

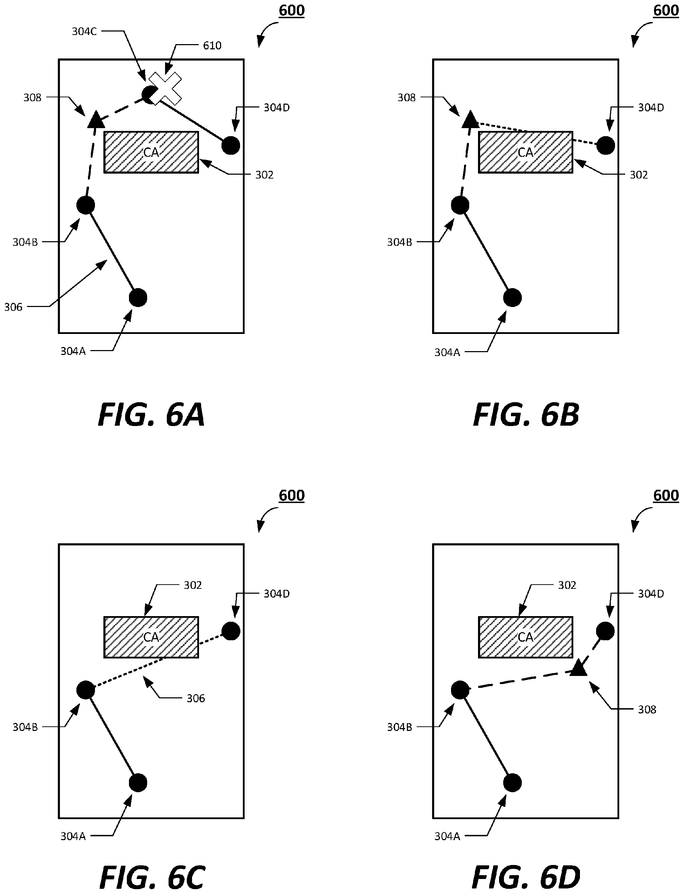

Figures 6A-D illustrate example operations performed for dynamic waypoint management during modification to a route in an environment 600 that includes a constraint area 302. In the illustrated embodiment of Figures 6A-D, the modification is specifically a deletion 610 of the third waypoint 304C. Figure 6A illustrates the route that includes four waypoints that are user-defined and one adjustment waypoint 308, and further illustrates the request or an indication to delete the third waypoint 304C.

Figure 6B then illustrates the updating of the route according to the deletion 610 of the third waypoint 304C, which results in the adjustment waypoint 308 and the fourth waypoint 304D being sequentially consecutive and connected via a route segment 306. In the specific illustrated example, the route segment 306 connecting the adjustment waypoint 308 and the fourth waypoint 304D intersects with the constraint area 302, although intersection may not necessarily always result from a deletion 610 of a waypoint. Regardless and independent of any intersection, modification of a particular waypoint (e.g., deletion 610 of the third waypoint 304C) results in removal of adjustment waypoints 308 that precede and/or succeed the particular waypoint, as previously discussed. Thus, in the context of the illustrated embodiment, the adjustment waypoint 308 is removed to form a first revised route.

Figure 6C illustrates the first revised route not comprising the removed adjustment waypoint 308. Accordingly, the second waypoint 304B and the fourth waypoint 304D are then sequentially consecutive in the first revised route, and the route segment 306 connecting the second waypoint 304B and the fourth waypoint 304D intersects with the constraint area 302. Accordingly, one or more additional adjustment waypoints 308 are generated to form a second revised route that respects and satisfies the constraint area 302. Figure 6D then illustrates the second revised route including an additional adjustment waypoint 308 between (e.g., sequentially between) the second waypoint 304B and the fourth waypoint 304D and positioned outside of the constraint area 302. This second revised route may then be provided to an autonomous vehicle, rendered for display, and/or the like.

With the above, Figures 3A-D, Figures 4A-C, Figures 5A-D, and Figures 6A-D each describe example operations performed for dynamic waypoint management during some modification to a route, including addition of waypoints, re-location of waypoints, and deletion of waypoints. In various embodiments, such modifications are specified and requested by a user (e.g., via input/output circuitry 206). Accordingly, various embodiments provide improved efficiency and reduce necessary user inputs, as waypoints are dynamically managed to generate revised routes from specified and requested route modifications, with the revised routes respecting and satisfying constraint areas 302. The revised routes provide efficiency through the removal of various adjustment waypoints 308 that may no longer be relevant and may introduce unnecessary or meaningless detours in the route. Thus, efficient constrained navigation is provided with minimal user inputs.

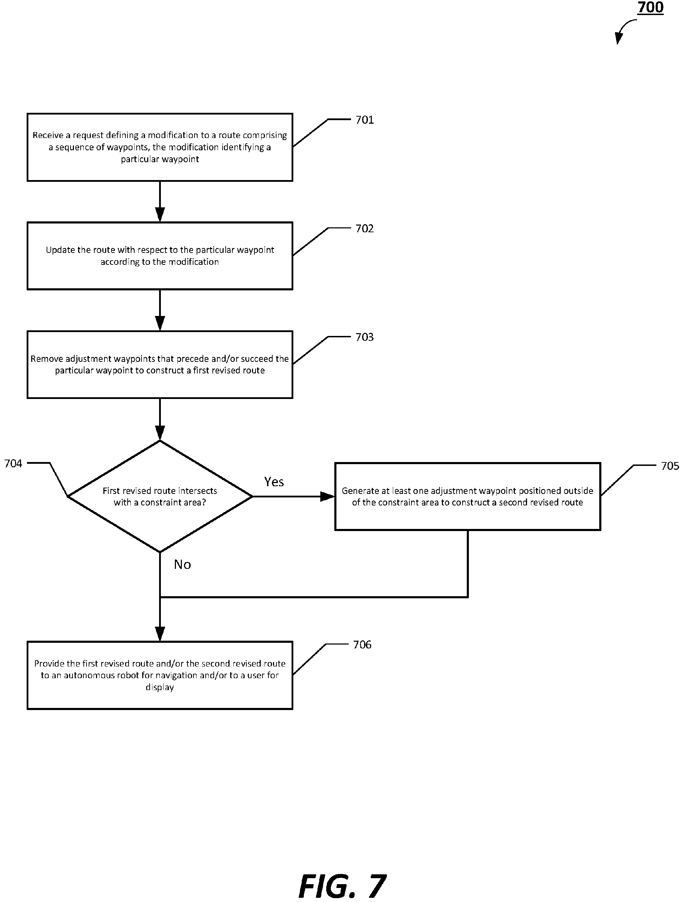

Referring now to Figure 7, a flowchart 700 is provided. The flowchart 700 illustrates example operations that are performed by the apparatus 200 (e.g., when embodied by the navigation control system 101 and/or the autonomous vehicle 106), in some example embodiments. In particular, the flowchart 700 includes various operations performed by the apparatus 200 for dynamic waypoint management during route modifications to generate revised routes respecting and satisfying constraint areas.

As shown, at operation 701, the apparatus 200 receives a request defining a modification to a route comprising a sequence of waypoints, and the apparatus 200 includes means, such as the processor 202, memory 204, input/output circuitry 206, communications circuitry 208, and/or the like, for receiving a request defining a modification to a route comprising a sequence of waypoints. The modification identifies a particular waypoint. In various example instances, the particular waypoint may be one of the sequence of waypoints, and the modification is a re-location the particular waypoint, example re-locations being illustrated in at least Figures 4A-B and Figures 5A-B. In other example instances, the modification is a deletion of the particular waypoint, such as the deletion 610 illustrated in at least Figures 6A-B. In other example instances, the particular waypoint is not one of the sequence of waypoints, and the modification is an addition of the particular waypoint to the sequence of waypoints. Figures 3A-B illustrate an example addition of a particular waypoint to the route.

A waypoint of the route is either a mandatory waypoint or a system-defined waypoint. A mandatory waypoint may refer to a waypoint explicitly added by a user to the route and may be added by the user to direct an autonomous vehicle 106 to perform some action, function, or task at the waypoint. Meanwhile, a system-defined waypoint may refer to a waypoint automatically generated upon determination that a route (e.g., a route segment thereof) intersected with a constraint area. A system-defined waypoint may be for primarily navigational purposes, and may be initially configured without any associated actions, functions, or tasks (e.g., although a user may modify a system-defined waypoint to be associated with some action, function, or task to be performed by the autonomous vehicle 106). Referring again to Figures 3A-C for example, mandatory waypoints are indicated by circles and may be specified by a user, while an adjustment waypoint is indicated by a triangle and is generated based at least in part on the route including the mandatory waypoints intersecting the constraint area.

In various embodiments, the request defining the modification is received via the input/output circuitry 206 of the apparatus 200. In some example embodiments, the input/output circuitry 206 renders the route for display and is configured to receive user input or user interaction causing a request defining the modification to be received. For instance, the route and waypoints thereof are displayed overlaid on a digital map, a grid, a coordinate system, and/or the like, and a user may drag (e.g., virtually) a waypoint of the route along the digital map, grid, coordinate system, and/or the like to re-locate the waypoint, for example. In any regard, the modification identifying the particular waypoint is specified and defined based at least in part on user input or user interaction, in various embodiments. Additionally or alternatively, the request defining the modification is received via communications circuitry 208 of the apparatus 200. For example, the request may be embodied by an application programming interface (API) call, query, request, and/or the like originating from a client device associated with the user.

At operation 702, the apparatus 200 updates the route with respect to the particular waypoint according to the modification, and the apparatus 200 includes means, such as processor 202, memory 204, and/or the like, for updating the route. In instances in which the modification includes an addition of the particular waypoint, the route is updated to include the particular waypoint, whether the particular waypoint is appended in some examples or inserted between existing waypoints in other examples. In instances in which the modification includes a re-location of the particular waypoint, the route is updated to reflect new location information (e.g., coordinates) for the particular waypoint. In instances in which the modification includes a deletion of the particular waypoint, the route is updated to not include the particular waypoint and to connect the waypoints previously neighboring the particular waypoint. Figure 3B provides an example illustration of a route being updated according to the addition of a particular waypoint. Figures 4B and 5B each provide example illustrations of routes being updated according to the re-location a particular waypoint. Figure 6B provides an example illustration of a route being updated according to the deletion of a particular waypoint.

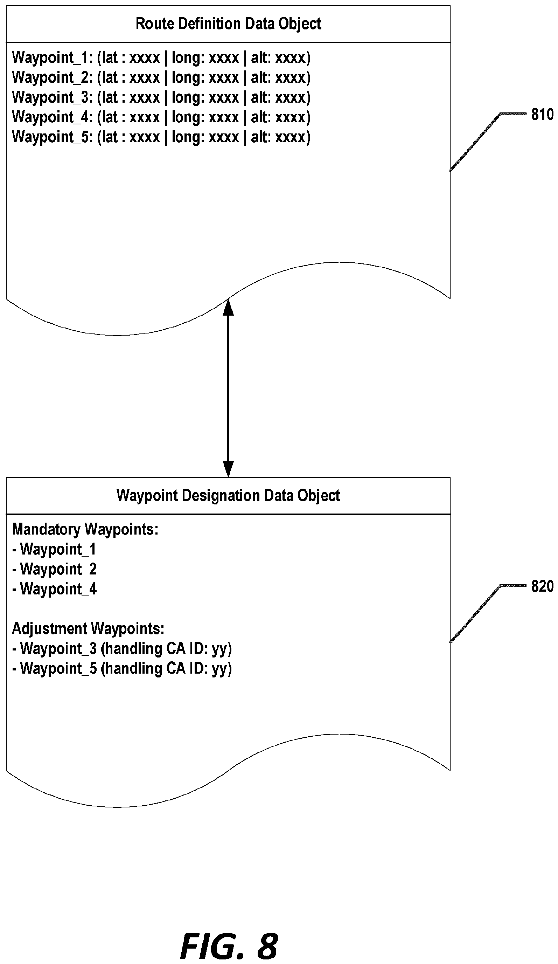

In various embodiments, the route is specifically defined by a route definition data object (e.g., a file) that describes location information, parameters, and/or the like for each waypoint of the route. Updating the route then comprises updating the route definition data object with new waypoints, new location information for existing waypoints, removal of information associated with existing waypoints, and/or the like. Figure 8 illustrates an example route definition data object 810 that describes information for five waypoints of the route. For example, the route definition data object 810 describes coordinates for each waypoint of the route, such as latitudinal, longitudinal, and altitude coordinates. In various embodiments, the route definition data object 810 is configured in a standardized format, such as various mission plan-text file formats. Further, the route definition data object 810 is configured to describe location information (e.g., coordinates) for waypoints in a format recognizable and processable by an autonomous vehicle for navigation.

In various embodiments, updating the route includes updating a waypoint designation data object associated with the route and/or associated with the route definition data object defining the route. Figure 8 also illustrates an example waypoint designation data object 820. The waypoint designation data object 820 is configured to describe the waypoint designations of waypoints of a route, or whether a waypoint is a mandatory waypoint or an adjustment waypoint. In the illustrated embodiment, for example, the waypoint designation data object 820 describes that Waypoint 1, Waypoint_2, and Waypoint_4 as described by the route definition data object are mandatory waypoints, while Waypoint_3 and Waypoint_5 are adjustment waypoints. Thus, the waypoint designation data object 820 is updated to describe the particular waypoint identified by the modification as a mandatory waypoint (e.g., due to the modification being defined in part by user input or user interaction). For instance, addition of a particular waypoint comprises updating the waypoint designation data object 820 to describe the particular waypoint as a mandatory waypoint. As another example, re-location of a particular waypoint that is an adjustment waypoint comprises updating the waypoint designation data object 820 to describe the particular waypoint instead as a mandatory waypoint. The data of an adjustment waypoint may be deleted from a memory of the autonomous vehicle 106 automatically when the adjustment waypoint is removed from the route, for example.

In various embodiments, the waypoint designation data object 820 further describes and identifies a particular constraint area for which an adjustment waypoint was generated. For example, the adjustment waypoint is generated due to a route intersecting with the particular constraint area, and thus, the waypoint designation data object 820 identifies the particular constraint area in association with the adjustment waypoint. A constraint area may be associated with an area identifier, or the waypoint designation data object 820 may identify a constraint area using coordinates belonging to the constraint area.

Returning to Figure 7, at operation 703, the apparatus 200 removes any adjustment waypoints that precede and/or succeed the particular waypoint identified by the modification, and the apparatus 200 includes means, such as processor 202, memory 204, and/or the like, for removing any adjustment waypoints precede and/or succeed the particular waypoint. As previously described, any adjustment waypoints that immediately and consecutively precede and/or succeed the particular waypoint are specifically removed. In other words, adjustment waypoints that are sequentially between the particular waypoint and the sequentially closest preceding mandatory waypoint are removed, as are adjustment waypoints that are sequentially between the particular waypoint and the sequentially closest succeeding mandatory waypoint. In identifying such adjustment waypoints for removal, the apparatus 200 is configured to access, reference, and process the waypoint designation data object 820 to specifically identify adjustment waypoints.

This removal of adjustment waypoints results in the construction, generation, and/or the like of a first revised route that does not include said adjustment waypoints. In some embodiments, the first revised route is generated based at least in part on removing said adjustment waypoints and information thereof (e.g., coordinates, metadata) from the route definition data object 810. In other embodiments, a new route definition data object 810 (e.g., along with an associated new waypoint designation data object 820) is generated to define the first revised route. In various embodiments, the first revised route is rendered for display (e.g., via the input/output circuitry 206) upon removal of the adjustment waypoints that precede and/or succeed the particular waypoint. As an example, Figure 4C illustrates a first revised route constructed based at least in part on the removal of adjustment waypoints preceding and/or succeeding the particular waypoint that is re-located. Figure 5C also illustrates an example first revised route constructed based at least in part on the removal of adjustment waypoints preceding and/or succeeding the particular waypoint that is re-located. As a further example, Figure 6C illustrates a first revised route constructed based at least in part on the removal of adjustment waypoints preceding and/or succeeding the particular waypoint that is deleted.

As previously discussed, this removal of adjustment waypoints that precede and/or succeed the particular waypoint improves efficiency in navigation, as the additional route segments rooted from one such adjustment waypoint that respect and satisfy a constraint area may no longer be needed, no longer provide efficiency for the route, no longer respect or satisfy the constraint area, and/or the like. Thus, navigational efficiency is improved by removing potentially unnecessary and meaningless detours through such adjustment waypoints.

The flowchart 700 continues to decision node 704, at which the apparatus 200 determines whether the first revised route intersects with a constraint area, and the apparatus 200 includes means, such as processor 202, memory 204, and/or the like, for determining whether the first revised route intersects with a constraint area. In doing so, the apparatus 200 may plot route segments between waypoints of the first revised route and determine whether the plotted route segments intersect with constraint areas known to the apparatus 200. In some embodiments, the apparatus 200 specifically or first determines whether route segments connected to the particular waypoint and/or route segments resulting from the modification to the particular waypoint intersect with a constraint area. For example, the example first revised route illustrated in Figure 6C intersects with a constraint area.

If a route segment connecting two waypoints (e.g., one of which being the particular waypoint that is modified) intersects with a constraint area, operation 705 may be performed. In some instances, operation 705 may be performed for each route segment connecting a pair of waypoints that intersects with a constraint area. At operation 705, the apparatus 200 generates at least one additional adjustment waypoint positioned outside of the constraint area and sequentially between the two waypoints, and the apparatus 200 includes means, such as processor 202, memory 204, and/or the like, for generating additional adjustment waypoints between the two waypoints and positioned outside of the constraint area. This generation of additional adjustment waypoints constructs, generates, forms, and/or the like a second revised route from the first revised route, the second revised route respecting and satisfying constraint areas.

In various embodiments, the additional adjustment waypoints are generated using one or more pathfinding techniques, one or more minimizing techniques, one or more optimization techniques, and/or the like, implemented, for example, by the processor 202 such that route segments resulting from the generation of the additional adjustment waypoints and connected to the additional adjustment waypoints are optimized. In some embodiments, the additional adjustment waypoints are positioned at least a threshold distance away from a border of the constraint area. The apparatus 200 specifically generates the additional adjustment waypoints to construct the second revised route by modifying the route definition data object 810 and/or generating a new route definition data object 810 specific to the second revised route. Similarly, the apparatus 200 updates the waypoint designation data object 820 and/or generates a new waypoint designation data object 820 specific to the second revised route to specifically describe the additional waypoints as adjustment waypoints. In some embodiments, the apparatus 200 further indicates and/or identifies the constraint area that is intersected in the waypoint designation data object 820 in association with the additional adjustment waypoints. As an example, Figure 4D illustrates an adjustment waypoint (e.g., indicated by a triangle) being generated and positioned outside of the constraint area. Figure 6D provides another example of an adjustment waypoint (e.g., indicated by a triangle) being generated and positioned outside of the constraint area.

If the first revised route does not intersect with any constraint areas, then flowchart 700 may proceed to operation 706. Flowchart 700 may also proceed to operation 706 from operation 705. In any regard, at operation 705, the apparatus 200 provides the first revised route and/or the second revised route to an autonomous vehicle 106 for navigation and may additionally or alternatively provide the first revised route and/or the second revised route for display to a user (e.g., the user requesting the modification). Apparatus 200 includes means, such as processor 202, memory 204, input/output circuitry 206, communications circuitry 208, and/or the like, for providing a route to an autonomous vehicle 106 for navigation and for providing and rendering a route for display to a user. For example, a route is provided to an autonomous vehicle 106 via communications circuitry 208, and a route is displayed via input/output circuitry 206.

In various embodiments, similar operations are performed for dynamic waypoint management during route modifications involving addition and/or removal of constraint areas. In an example embodiment, an indication of an addition of a constraint area is received. The indication may include data associated with the constraint area, such as coordinates, boundaries or borders, a unique identifier or name for the constraint area, and/or the like. The apparatus 200 may then determine whether a respective route intersects with the constraint area. For example, the indication of an addition of a constraint area is received for an original route (e.g., no waypoint modifications have yet been received), and the apparatus 200 determines whether the original route intersects with the constraint area. As another example the indication of an addition of a constraint area is received subsequent to dynamic waypoint management for a waypoint modification (e.g., subsequent to operations of flowchart 700), and the apparatus 200 determines whether the second revised route intersects with the constraint area.

If an intersection with the added constraint area is determined, then the apparatus 200 may then generate at least one additional waypoint so as to generate a third revised route. The apparatus 200 may generate the at least one addition waypoint in a manner similar to that of operation 705, in that one or more pathfinding techniques, one or more minimization techniques, one or more optimization techniques, and/or the like are used to position the at least one additional waypoint.

In another example embodiment, an indication of the removal of a particular constraint area is received. Responsive to such an indication, the apparatus 200 may remove particular adjustment waypoints from the route. Specifically, the apparatus 200 removes particular adjustment waypoints from the route that were previously generated based at least in part on a route (e.g., an original route, a first revised route, a second revised route) intersecting with the particular constraint area. With the removal of the particular constraint are then, any intersection causing the generation of the particular adjustment waypoints would not exist, and the particular adjustment waypoints would then introduce unnecessary and meaningless detours to the route. As such, particular adjustment waypoints associated with the particular constraint area (e.g., generated due to the particular constraint area) are removed. As previously discussed, the waypoint designation data object 820 may be configured to identify the constraint area associated with an adjustment waypoint (e.g., causing or prompting the generation of the adjustment waypoint), such that the apparatus 200 may reference the waypoint designation data object 820 for removal of particular adjustment waypoints associated with the particular constraint area to be removed.

In various embodiments, the constraint areas 302 have temporal properties. For example, a constraint area 302 may only periodically or temporarily exist in an environment and/or a constraint area 302 is scheduled. In such example instances, revised routes generated to account for a periodic, temporary, or scheduled constraint area 302 may be stored (e.g., in memory 204, in a database). The revised routes may then be retrieved, received, or accessed according to the temporal properties of the constraint area 302 and may then be provided to the autonomous vehicle 106. Advantageously then, dynamic waypoint management (e.g., generation of adjustment waypoints in response to constraint areas 302) may be performed fewer times to generate a revised route that can be repeatedly provided to the autonomous vehicle 106.

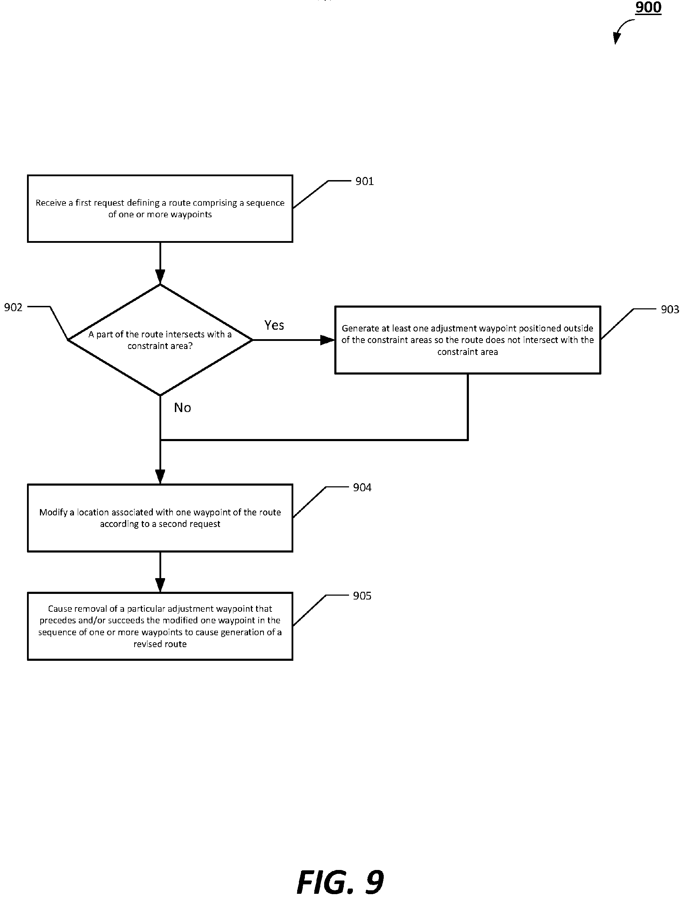

Referring now to Figure 9, another flowchart 900 is provided. The flowchart 900 illustrates example operations that are performed by the apparatus 200 (e.g., when embodied by the navigation control system 101 and/or the autonomous vehicle 106), in some example embodiments. In particular, the flowchart 900 includes various operations performed by the apparatus 200 for dynamic waypoint management generally for a route, such as for re-location of a waypoint.

At operation 901, the apparatus 200 receives a first request defining a route comprising a sequence of one or more waypoints, and the apparatus 200 includes means, such as processor 202, memory 204, input/output circuitry 206, communications circuitry 208, and/or the like, for receiving a first request defining a route comprising a sequence of one or more waypoints. The first request may be a request defining a route, a request defining an addition of a waypoint (e.g., the request received in operation 701 of flowchart 700), and/or the like. The example route illustrated in Figure 3B may be a route defined by the first request. In various example instances, the first request is defined by user input and received through a user interface. In various other example instances, the first request may be received via network communication with a client device.

At decision node 902, the apparatus 200 determines whether a part of the route intersects with a constraint area, and the apparatus 200 includes means, such as processor 202, memory 204, and/or the like, for determining whether a part of the route intersects with a constraint area. The part of the route may be a waypoint of the route and/or a route segment between two waypoints of the route. As an illustrative example, a part of the example route illustrated in Figure 3B (specifically the route segment between the waypoints 304B and 304C) intersects with the constraint area 302.

If the apparatus 200 determines that a part of the route intersects with the constraint area, the apparatus 200 may perform operation 903. At operation 903, in accordance with a determination (e.g., at decision node 902) that the part of the route intersects with the constraint area , the apparatus 200 generates at least one adjustment waypoint that is positioned outside of the constraint area for the route such that the route does not intersect with the constraint area. The apparatus 200 includes means, such as processor 202, memory 204, and/or the like, for generating at least one adjustment waypoint for the route, with the adjustment waypoint being positioned outside of the constraint area.

In various embodiments, the adjustment waypoint is generated using one or more pathfinding techniques, one or more minimizing techniques, one or more optimization techniques, and/or the like, implemented, for example, by the processor 202 such that the route is optimized. In some embodiments, the adjustment waypoint is positioned at least a threshold distance away from a border of the constraint area. The apparatus 200 may specifically generate the adjustment waypoint by modifying the route definition data object 810. Similarly, the apparatus 200 may update the waypoint designation data object 820 to specifically describe the generated waypoint as an adjustment waypoint. In some embodiments, the apparatus 200 further indicates and/or identifies the constraint area that is intersected in the waypoint designation data object 820 in association with the adjustment waypoint. As an example, Figure 3C illustrates the generation of an adjustment waypoint 306 (e.g., indicated by a triangle) positioned outside of the constraint area so that the route does not intersect with the constraint area 302.

Meanwhile, in accordance with a determination (e.g., at decision node 902) that a part of the route does not intersect with a constraint area, operation 904 is performed. In various embodiments, operation 904 may also be performed subsequent to operation 903 in accordance with a determination that a part of the route intersects with a constraint area. In any regard, at operation 904, the apparatus 200 modifies a location associated with one waypoint of the route (e.g., one waypoint of the sequence of one or more waypoints) according to a second request, and the apparatus 200 includes means, such as processor 202, memory 204, and/or the like, for modifying a location associated with one waypoint of the route according to the second request. In various embodiments, the second request defines a modification or a re-location of a waypoint of the route, and the second request may be defined through user input via input/output circuitry 206.

The one waypoint that has its location modified may be a mandatory waypoint of the route or may be an adjustment waypoint of the route. For example, the one waypoint that is modified may be the adjustment waypoint generated at operation 903, in some example instances. In such example instances, modification of an adjustment waypoint may result in the adjustment waypoint being re-defined (e.g., in the waypoint designation data object 820) as a mandatory waypoint. In other example instances, the one waypoint that is modified is a mandatory waypoint, such as a waypoint defined with the route via the first request (e.g., received at operation 901). Figures 4A-B and Figures 5A-B illustrate example modifications of waypoint locations (e.g., re-locations) according to a second request.

At operation 905, the apparatus 200 causes modification of a particular adjustment waypoint that precedes and/or succeeds the modified one waypoint in the sequence of one or more waypoints to cause generation of a revised route. In various embodiments, the modification is a removal of the particular adjustment waypoint, and the revised route does not comprise the particular adjustment waypoint. The apparatus 200 includes means, such as processor 202, memory 204, and/or the like, for causing removal of a particular adjustment waypoint that precedes and/or succeeds the modified one waypoint in the sequence of one or more waypoints to cause generation of a revised route that does not comprise the particular adjustment waypoint.

Figure 4C and Figure 5C each illustrate example removals of adjustment waypoints preceding and/or succeeding the modified or re-located waypoints. In identifying such adjustment waypoints for removal, the apparatus 200 is configured to access, reference, and process the waypoint designation data object 820 to specifically identify adjustment waypoints. As previously discussed, this removal of adjustment waypoints that precede and/or succeed the particular waypoint improves efficiency in navigation, as the additional route segments rooted from one such adjustment waypoint that respect and satisfy a constraint area may no longer be needed, no longer provide efficiency for the route, no longer respect or satisfy the constraint area, and/or the like. Thus, navigational efficiency is improved by removing potentially unnecessary and meaningless detours through such adjustment waypoints. Generally, it may be recognized that operation 905 of flowchart 900 may be performed similarly to operation 703 of flowchart 700.

As described above, operations, methods, apparatuses, and computer program products are disclosed for dynamic waypoint management during route modifications to generate and provide revised routes for navigation or traversal by an autonomous vehicle. Various embodiments provide technical benefits that include reduced user input and increased efficiency in constrained navigation.

Figures 7 and 9 illustrate flowcharts depicting operations according to an example embodiment of the present disclosure. It will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 204 of an apparatus employing an embodiment of the present disclosure and executed by a processor 202. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

Many modifications and other embodiments of the present disclosure set forth herein will come to mind to one skilled in the art to which the present disclosure pertain having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims.

Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A computer-implemented method comprising:
receiving a first request defining a route comprising a sequence of one or more waypoints;
determining whether a part of the route intersects with a constraint area;
in accordance with a determination that the part of the route intersects with the constraint area, generating at least one adjustment waypoint that is positioned outside of the constraint area for the route such that the route does not intersect with the constraint area;
modifying a location associated with one waypoint of the sequence of one or more waypoints according to a second request; and
causing modification of a particular adjustment waypoint that precedes and/or succeeds the modified one waypoint in the sequence of one or more waypoints to cause generation of a revised route.

2. The computer-implemented method of claim 1, further comprising causing provision of the revised route to an autonomous vehicle to direct the autonomous vehicle to navigate according to the revised route.

3. The computer-implemented method of any of the preceding claims, further comprising rendering the revised route and the constraint area for display.

4. The computer-implemented method of any of the preceding claims, wherein the route is associated with a waypoint designation data object configured to describe whether a waypoint of the route is an adjustment waypoint.

5. The computer-implemented method of claim 4, wherein the one waypoint is an adjustment waypoint, and wherein modifying the location associated with the one waypoint comprises updating the waypoint designation data object to describe the one waypoint as a mandatory waypoint.

6. The computer-implemented method of any of the preceding claims, further comprising:
receiving an indication of an addition of a second constraint area;
determining whether a part of the revised route intersects with the second constraint area; and
in accordance with a determination that the part of the revised route intersects with the second constraint area, generating at least one additional adjustment waypoint to cause generation of a second revised route that does not intersect with the constraint area and the second constraint area.

7. The computer-implemented method of any of the preceding claims, further comprising:
receiving an indication of a removal of a particular constraint area; and
removing one or more particular adjustment waypoints that were generated in accordance with a determination that a respective route intersected with the particular constraint area.

8. The computer-implemented method of any of the preceding claims, wherein the modification to the route comprises (i) an addition of the particular waypoint to the sequence of one or more waypoints, (ii) a re-location of the particular waypoint, the particular waypoint being one of the sequence of one or more waypoints, or (iii) a deletion of the particular waypoint from the sequence of one or more waypoints.

9. The computer-implemented method of any of the preceding claims, wherein the at least one adjustment waypoint is generated using one or more pathfinding techniques configured to optimize the route.

10. The computer-implemented method of any of the preceding claims, wherein the second request is received responsive to user interaction with a displayed rendering of the sequence of one or more waypoints of the route.

11. An apparatus comprising:
means for receiving a first request defining a route comprising a sequence of one or more waypoints;
means for determining whether a part of the route intersects with a constraint area;
means for generating, in accordance with a determination that the part of the route intersects with the constraint area, at least one adjustment waypoint that is positioned outside of the constraint area for the route such that the route does not intersect with the constraint area;
means for modifying a location associated with one waypoint of the sequence of one or more waypoints according to a second request; and
means for causing modification of a particular adjustment waypoint that precedes and/or succeeds the modified one waypoint in the sequence of one or more waypoints to cause generation of a revised route.

12. The apparatus of claim 11, wherein the route is associated with a waypoint designation data object configured to describe whether a waypoint of the route is an adjustment waypoint.

13. The apparatus of claim 12, wherein the one waypoint is an adjustment waypoint, and wherein the means for modifying the location associated with the one waypoint further comprises means for updating the waypoint designation data object to describe the one waypoint as a mandatory waypoint.

14. A computer program product comprising a non-transitory computer readable storage medium having program code portions stored thereon, the program code portions configured, upon execution, to:
receive a first request defining a route comprising a sequence of one or more waypoints;
determine whether a part of the route intersects with a constraint area;
in accordance with a determination that the part of the route intersects with the constraint area, generate at least one adjustment waypoint that is positioned outside of the constraint area for the route such that the route does not intersect with the constraint area;
modify a location associated with one waypoint of the sequence of one or more waypoints according to a second request; and
cause modification of a particular adjustment waypoint that precedes and/or succeeds the modified one waypoint in the sequence of one or more waypoints to cause generation of a revised route.

15. The computer program product of claim 14, wherein the route is associated with a waypoint designation data object configured to describe whether a waypoint of the route is an adjustment waypoint.
